# EUROPÄISCHE PATENTSCHRIFT

(11) **EP 3 283 867 B1**
(45) Veröffentlichungstag und Bekanntmachung des Hinweises auf die Patenterteilung: **01.07.2020**
(21) Anmeldenummer: 16723932.6
(22) Anmeldetag: 14.04.2016
(51) Int. Cl.: G01N 15/06, B01D 5/00

(54) **VORRICHTUNG ZUM ZÄHLEN VON PARTIKELN**
DEVICE FOR COUNTING PARTICLES
DISPOSITIF DE COMPTAGE DE PARTICULES

(30) Priorität: 16.04.2015 DE 102015004853
(43) Veröffentlichungstag der Anmeldung: 21.02.2018
(73) Patentinhaber: Palas GmbH Partikel-und Lasermesstechnik, 76229 Karlsruhe (DE)
(72) Erfinder: MÖLTER, Leander, 76744 Wörth am Rhein (DE); WEISS, Maximilian, 76356 Weingarten (DE)
(74) Vertreter: Lichti - Patentanwälte Partnerschaft mbB
(86) Internationale Anmeldenummer: PCT/EP2016/000611
(87) Internationale Veröffentlichungsnummer: WO 2016/165827

(56) Entgegenhaltungen:
- US-A- 5 026 155
- US-A1- 2003 202 169
- US-A1- 2008 083 274
- US-A1- 2008 137 065
- US-A1- 2008 152 547
- US-A1- 2010 180 765
- US-B1- 6 498 641

## Beschreibung

Die Erfindung betrifft eine Vorrichtung zum Kondensieren von Dampf an Kondensationskernen, wie in Anspruch 1 definiert.

Es sind gattungsgemäße Vorrichtungen bekannt, bei denen eine Partikel führende Gasströmung - also ein strömendes Aerosol - in eine Verdampfungseinheit geleitet wird, in der eine Arbeitsflüssigkeit, beispielsweise Butanol, erwärmt und verdampft wird. Die verdampften Moleküle der Arbeitsflüssigkeit lagern sich an die zu messenden Partikel an, wodurch sich der effektive Durchmesser der zu messenden Partikel vergrößert. In dieser Form wird die Gasströmung weiter in Richtung des Auslasses zur Messeinheit transportiert, die die vergrößerten Partikel detektiert, beispielsweise durch optische Vorrichtungen.

In einer Kondensationseinheit wird der Partikel führende Gasstrom mit den Molekülen der Arbeitsflüssigkeit abgekühlt. Die Partikel des Gasstroms dienen dabei als Kondensationskerne, wodurch sich ihr effektiver Durchmesser nochmals vergrößert und die Detektion der Partikel dadurch vereinfacht 2017007419 wird. Eine gattungsgemäße Vorrichtung mit einer vorteilhaften Verdampfungseinheit ist insbesondere aus der DE 10 2005 001 992 A1 / EP 1 681 549 A2 bekannt, deren Offenbarungsgehalt auch zum Gegenstand der vorliegenden Offenbarung gemacht wird. Relevante Dokumente des Standes der Technik sind auch die folgenden: US6498641, US5026155, US2010/180765 und US2008/137065.

Allen Ausführungen ist gemein, dass die durch die Vorrichtung geleitete Partikel führende Gasströmung stets als laminare Strömung vorliegt. Die Gasströmung strömt im Querschnitt gesehen in gedachten Schichten, es findet keine Vermischung der Schichten untereinander statt, sodass keine Wirbelströmungen auftreten. Bei allen gattungsgemäßen Ausführungen sind die Heizelemente an der radialen Außenseite des Kanals vorgesehen, durch den die Gasströmung fließt, so dass dort stets der höchste Anteil an verdampfter Arbeitsflüssigkeit vorliegt und in radialer Richtung nach innen die Konzentration schnell abfällt.

Im Folgenden werden Richtungsangaben durch ein Zylinderkoordinatensystem beschrieben. Dabei entspricht die axiale Richtung der Längsachse der Vorrichtung von deren Aerosoleinlass zum Aerosolauslass. Die Aerosol-Vorrichtung ist in der Regel - aber nicht notwendigerweise - senkrecht ausgerichtet, wobei der Auslass oberhalb des Einlasses liegt. Eine radiale Richtung ist senkrecht zur axialen Richtung, wie auch eine Umlaufsrichtung, die auch senkrecht zur Radialrichtung steht.

Die Ansprechgeschwindigkeit des Partikelzählers hängt insbesondere ab von der Zeit, die zum Vermischen der Gasströmung mit der verdampften Arbeitsflüssigkeit benötigt wird. Aufgrund der laminaren Strömung der Gasströmung ist einerseits der Strömungsgeschwindigkeit des Gases eine Obergrenze gesetzt. Andererseits weist eine laminare Strömung im radialen Querschnitt ein stark variierendes Geschwindigkeitsprofil auf, bei dem die Strömungsgeschwindigkeit in der radialen Mitte des Strömungsquerschnitts am größten ist und zur radialen Außenseite hin abfällt. Damit liegt gerade in dem Bereich mit der höchsten Konzentration von verdampfter Arbeitsflüssigkeit eine geringe Strömungsgeschwindigkeit des Gases vor, was zu einer verminderten Durchmischung führt. Dies beeinträchtigt die Ansprechgeschwindigkeit des Partikelzählers in erheblichem Maße.

Es ist daher die Aufgabe der Erfindung eine gattungsgemäße Vorrichtung dahingehend weiterzuentwickeln, dass die o.g. Nachteile beseitigt werden und insbesondere eine schnellere Ansprechgeschwindigkeit des Partikelzählers möglich ist.

Die Aufgabe der Erfindung wird mit einer gattungsgemäßen Vorrichtung gelöst, die dadurch gekennzeichnet ist, dass mehrere gleichverteilt über den Umfang des Zuführkanals angeordnete Strömungsdurchlässe vom Zuführkanal zum Sättigungskanal hin vorgesehen sind, und relativ zur Erstreckungsrichtung des Zuführkanals in einem Winkel von mehr als 90° ausgerichtet sind.

Als Kanal der partikelbehafteten Gas- oder Aerosolströmung wird ein länglicher, in Umfangsrichtung geschlossener Durchlass bezeichnet, der vorzugsweise kreisförmigen Querschnitt, also zylinderförmige Kontur hat, sich aber auch verjüngen kann. Auch eine mehrkantige Ausgestaltung ist nicht ausgeschlossen. Demgegenüber wird ein nach oben offener Flüssigkeitskanal für die zu verdampfende Arbeitsflüssigkeit als solcher (aber mit der speziellen Qualifizierung "offen") bezeichnet.

Durch die erfindungsgemäße Weiterentwicklung wird insbesondere eine Wirbelströmung in der Verdampfungseinheit erzeugt. Beim Durchströmen der Verdampfungseinheit mit der darin befindlichen verdampften Arbeitsflüssigkeit bilden sich Wirbelzonen, die die Durchmischung der Partikel führenden Gasströmung mit der verdampften Arbeitsflüssigkeit stark beschleunigen. Indem die Wirbelströmung der Gasströmung genutzt wird, kann auch die Fließgeschwindigkeit der Gasströmung über den Querschnitt hin vergleichmäßigt werden, da die strenge Anforderung an eine laminare Gasströmung entfällt. Durch die Ausbildung von Wirbelzonen wird eine erhöhte und beschleunigte Durchmischung mit der verdampften Arbeitsflüssigkeit erreicht. Gleichzeitig kommt es nicht zu Verlusten von Partikeln durch Abscheidung. An der Wand. Da aufgrund der beschleunigten erhöhten Durchmischung der Gasströmung mit der Arbeitsflüssigkeit das Geschwindigkeitsprofil der Gasströmung vergleichmäßigt wird und damit die Verweilzeit aller Partikel in der Verdampfungs- und Kondensationseinheit weitgehend gleich ist, vergrößert sich auf diese Weise die Ansprechgeschwindigkeit des Partikelzählers.

Wesentlich ist, dass die erfindungsgemäße Vorrichtung einen kompakten Aufbau und eine platzsparende Grundfläche hat sowie insbesondere ein geringes Gesamtvolumen aufweist. Dann kann das Mischungsverhältnis der Verdampfungsflüssigkeit und/oder der oberen Temperatur schnell verändert werden. Hierdurch kann ebenso schnell die temperaturabhängige untere Nachweisgrenze der Cut-Off der Strömungspartikel, an dem eine Ablagerung der (verdampften) Verdampfungsflüssigkeit erfolgt, geändert werden. So können optimal Partikelgrößenfunktionen als Kondensationskern der Partikel in der Partikelströmung bestimmt werden.

Die untere Nachweisgrenze nach ISO 15900 und ISO 27891 kann bei Messzeiten von bis zu mehreren Stunden sehr schnell im Minutenbereich, insbesondere im Bereich von weniger als drei Minuten reproduzierbar eingestellt werden. Der Cut-Off Durchmesser lässt sich vorzugsweise bei Partikelabmessungen bei 7 nm für Umweltmessungen, bei 23 nm für Dieselrußmessungen nach der europäischen PMP-Richtlinie und für Anwendungen im reinen Raum für 30 nm, 50 nm und/oder z.B. 70 nm einstellen. So ist eine schnelle Einstellung der Temperaturen bzw. der Temperaturdifferenz des Verdampfungselements und des Kondensationselements möglich.

Dies wird insbesondere erreicht durch eine rotationssymmetrische Ausgestaltung der Vorrichtung mit konzentrisch angeordneten Kanälen. Der vertikale Zuführkanal ist zentrisch angeordnet und rohrförmig ausgebildet. Von dessen oberen Ende erstrecken sich schräg zurück nach unten unter einem Winkel α von mehr als 90° mehrere Strömungsdurchlässe gleich verteilt über den Umfang des Zuführkanals zu unteren Einlassbereichen des Sättigungskanals.

Der Querschnitt und insbesondere auch deren Gesamtquerschnitt der Strömungsdurchlässe ist geringer als der Querschnitt des Zuführkanals. Vorzugsweise sind drei bis acht, insbesondere vier Strömungsdurchlässe mit zueinander gleichem Winkelabstand vorgesehen. Zuführkanal und Strömungsdurchlässe sind vorzugsweise zylinderförmig, also mit kreisförmigen Querschnitten ausgebildet. Demgegenüber ist der diese konzentrisch vorgegebene Sättigungskanal zylindermantelförmig - also ein Ringkanal.

Die Teilchenströmung ändert sich demgemäß von Zuführkanal zu Strömungsdurchlässen einerseits und von Strömungsdurchlässen zu Sättigungskanal andererseits die Strömungsrichtung jeweils um Winkel α = β von mehr als 90°. Die Strömungsrichtungen der Teilchenströmung in Zuführkanal und Sättigungskanal verlaufen parallel. Hierdurch wird eine äußerst kompakte Ausgestaltung der Vorrichtung erreicht. So wird eine sehr gute Durchmischung durch eine sanfte Wirbelströmung und geringe Diffusionsverluste, insbesondere von kleinen Partikeln < 5nm erreicht.

Der Sättigungskanal läuft in seinem vertikal oberen stromab liegenden Bereich spitz zu und verengt den Ringkanal zu wiederum einem stromab folgenden zylindrischen Kondensationskanal, der mit dem Zuführkanal fluchtet. Die Achsen von Zuführkanal und Kondensationskanal fallen also zusammen. Der Auslass für die Teilchenströmung ist weiter verengt.

Typischerweise liegen die Volumenströme von adäquaten Kondensationspartikelzählern bei ca. 1 1/min. Schließlich ist durch die beschriebene konzentrische Ausgestaltung der erfindungsgemäßen Vorrichtung eine leichte geringfügige Anpassung der entsprechenden Vorrichtung (Scaling) an gewünschte Partikelströmungsdurchlassmessungen möglich, so vorzugsweise bis zu 3 1/min, aber insbesondere bei Reinraummessungen bis zu 10 1/min.

Typische Abmessungswerte für eine Vorrichtung mit einem Partikelströmungsdurchsatz von ca. 3 1/min sind die folgenden: Die Grundhöhe liegt bei 180-240 mm, der Durchmesser des Einlasses bei 5-6 mm, dessen Länge bei 40-60 mm, der Durchmesser der Strömungsdurchlässe bei 1-2 mm, der Länge bei 15-20 mm, der Innendurchmesser des Sättigungskanals bei 10-15 mm, dessen Außendurchmesser bei 35-45 mm und damit die Ringdurchlassstärke des Sättigungskanals bei 10-15 mm, die achsparallel verlaufende Länge des Sättigungskanals bei 35-45 mm, die Länge von diesem zur Verengung im Kondensationskanal spitz zulaufenden Bereich bei 20-30 mm, die Länge des Kondensationskanals im breiten Bereich bei 30-40 mm und der Durchmesser dort bei 10-15 mm, die Länge des Verengungsbereichs bei 15-20 mm und der Durchmesser des Partikelauslasses bei 4-6 mm.

Vorzugsweise ist vorgesehen, dass der mindestens eine Strömungsdurchlass eine Richtungskomponente entgegen der Erstreckungsrichtung des Zuführkanals aufweist. Durch die hierdurch bewirkte Umlenkung der Aerosolströmung wird die Bildung von Wirbelströmungen in der Verdampfungseinheit begünstigt. Auch ist hierdurch die Möglichkeit eines platzsparenden Aufbaus gegeben, da durch die (teilweise) Rückführung der Gasströmung die Vorrichtung eine geringere axiale Länge aufweisen kann. Dies trifft insbesondere dann zu, wenn vorzugsweise der Strömungsdurchlass unter einem Winkel von bis zu 180° relativ zur Erstreckungsrichtung des Zuführkanals ausgerichtet ist.

Es kann vorgesehen sein, dass der radiale Strömungsdurchmesser des Strömungsdurchlasses kleiner ist als der Strömungsdurchmesser des Zuführkanals und/oder des Sättigungskanals, wobei insbesondere derart auch die Querschnitte bestimmt sind. Die Fließgeschwindigkeit einer Strömung steigt mit sinkendem radialem Querschnitt, was die Bildung von Wirbelströmungen unterstützt. Dies erhöht zusätzlich die Ansprechgeschwindigkeit des Partikelzählers.

Vorzugsweise kann der mindestens eine Strömungsdurchlass in der Verdampfungseinheit als Bohrung in einem Leitkörper ausgestaltet sein. Dies bedeutet eine einfache konstruktive Gestaltung des Strömungsdurchlasses. Höchst vorzugsweise ist vorgesehen, dass der Leitkörper mindestens teilweise vom insbesondere koaxial verlaufenden Zuführkanal durchdrungen ist. Damit können sowohl mindestens Teile des Zuführkanals, als auch der Strömungsdurchlass im Leitkörper konstruktiv verwirklicht sein, was nicht nur konstruktiv einfach, wie beispielsweise durch Bohrungen, möglich ist, sondern auch einen platzsparenden Aufbau darstellt.

Die Verdampfungseinheit kann einen oberen Einlass und einen unteren Auslass zur Zu- und Abfuhr der Arbeitsflüssigkeit aufweisen, wobei der Einlass vertikal oberhalb des Auslasses angeordnet ist. So wird ermöglicht, dass sich die Arbeitsflüssigkeit nach Eintritt in das Innere der Verdampfungseinheit aufgrund der Schwerkraft nach unten bewegt und sich somit insbesondere in ständigem Kontakt mit dem Durchflussraum des Aerosols in Richtung des Auslasses bewegt. Ein weiterer Vorteil dieser Ausgestaltung ergibt sich aus der Tatsache, dass die Haupt-Fließrichtung der Arbeitsflüssigkeit entgegen der Gasströmung gerichtet ist und somit eine bessere Durchmischung erzielt wird. In dieser Ausgestaltung befindet sich der Flüssigkeitsauslass in der Nähe des Bodens der Verdampfungseinheit an deren axialer Unterseite. Dabei wird sichergestellt, dass der nicht verdampfte Anteil der Arbeitsflüssigkeit nicht in der Verdampfungseinheit verbleibt, sondern an deren Boden über den Auslass ab- und auch rückgeführt werden kann.

Die Arbeitsflüssigkeit wird dem Einlass der Verdampfungseinheit vorzugsweise durch eine Pumpe, insbesondere eine Membranpumpe, aus einem Vorlagegefäß über Leitungen, wie Schläuche, zugefördert und in gleicher Weise vom Auslass ebenfalls durch eine Pumpe, wie eine Membranpumpe zum Vorlagegefäß gefördert. Die Verdampfungseinheit selbst ist vorzugsweise als schraubenförmig konzentrisch zum Partikelströmungsraum geführt und mit diesem in Fluidkontakt stehenden Kanal ausgebildet, wie dies detailliert in der EP 1 681 549 A2 offenbart ist und, wie schon gesagt, vollauf zum Offenbarungsgehalt der vorliegenden Offenbarung gemacht wird.

Vorteilhafte Ausgestaltungen sehen vor, dass der Sättigungskanal der Verdampfungseinheit mantelförmig ausgestaltet ein Ringkanal ist, wobei der Sättigungskanal radial nach innen durch den Leitkörper und radial nach außen durch die Innenwandung der Verdampfungseinheit begrenzt ist. Durch diese Ausgestaltung fließt die Gasströmung radial außerhalb des Zentrums der Verdampfungseinheit. Dies verbessert zum Einen zusätzlich den Kontakt in der verdampften Arbeitsflüssigkeit und dient damit der Erhöhung der Durchmischung; auch vergrößert sich die äußere, die Verdampfungseinrichtung tragende Umfangsfläche bei gleichem Strömungsquerschnitt, wodurch die Kontaktfläche vergrößert wird. Zu einer bevorzugten Ausgestaltung der Verdampfungseinheit sei wiederum auf die DE 10 2005 001 992 A1 / EP 1 681 549 A2 verwiesen.

Vorteilhafte Ausführungen der Erfindung sehen vor, dass der Sättigungskanal eine homogene Temperatur für die Arbeitsflüssigkeit Butanol zwischen 28°C und 40°C und für die Arbeitsflüssigkeit Wasser zwischen 45°C und 60°C aufweist. Diese Temperatur kann auf die Verdampfungseigenschaften der Arbeitsflüssigkeit abgestimmt sein, wobei die Homogenität der Temperatur innerhalb des Verdampfungselements ein zu starkes Konzentrationsgefälle der verdampften Arbeitsflüssigkeit beispielsweise durch Konvektionsbewegungen vermeidet. Zudem fördert die homogene Temperatur des Verdampfungselements die Durchmischung der Arbeitsflüssigkeit mit der Gasströmung.

Vorzugsweise kann eine Kondensationseinheit mit einem Kondensationskanal vorgesehen sein, wobei insbesondere der Kondensationskanal durch eine Kühleinrichtung gekühlt ist. Die Temperatur des Kondensationskanals kann höchst vorzugsweise für die Arbeitsflüssigkeit Butanol eine homogene Temperatur zwischen 5°C und 25°C und für die Arbeitsflüssigkeit Wasser zwischen 15°C und 30°C aufweisen. Insbesondere in Kombination mit dem beheizten Bereich der Verdampfungseinheit erfährt die durch den Kondensationskanal hindurch fließende Gasströmung, die neben den Partikeln auch verdampfte Moleküle der Arbeitsflüssigkeit aufweist, eine Abkühlung. Diese führt zu einer Kondensation der verdampften Moleküle der Arbeitsflüssigkeit, wobei die Partikel der Gasströmung als Kondensationskerne heterogener Kondensation dienen und zu einer schnelleren Kondensation führen. Infolge dessen vergrößert sich der effektive Durchmesser der Partikel, was deren Detektierbarkeit durch die Messeinheit vereinfacht.

Eine erste Düseneinheit kann axial zwischen der Verdampfungseinheit und der Kondensationseinheit vorgesehen sein, wobei die Eintrittsöffnung der ersten Düseneinheit dem Sättigungskanal der Verdampfungseinheit entspricht und die Austrittsöffnung der ersten Düseneinheit zu dieser koaxial ist. Durch diese konstruktive Ausgestaltung wird der mantelförmige Sättigungskanal in einen koaxialen Kanal überführt, der nach der Austrittsöffnung der ersten Düseneinheit in den Kondensationskanal der Kondensationseinheit mündet. Die radiale Zusammenführung des Sättigungskanals ermöglicht eine weitere Durchmischung der Partikel des Gasstroms mit den verdampften Molekülen der Arbeitsflüssigkeit. Darüber hinaus besitzt ein radial zentrierter und durch einen zylindrischen Kanal geführter Aerosolstrom eine größere Unabhängigkeit bezüglich Temperaturschwankungen an der Außenwandung der Vorrichtung.

Vorzugsweise kann die Querschnittsfläche der Austrittsöffnung der ersten Düseneinheit geringer sein als die Querschnittsfläche der Eintrittsöffnung der ersten Düseneinheit. Infolge der damit einhergehenden Querschnitts-verengung erhöht sich die Strömungsgeschwindigkeit des Gasstromes, was zusätzlich die Vermischung der Partikel mit der Arbeitsflüssigkeit begünstigt.

Es kann eine zweite Düseneinheit axial zwischen der Kondensationseinheit und dem Auslass vorgesehen sein, wobei die Querschnittsfläche der Austrittsöffnung der zweiten Düseneinheit geringer ist als die Querschnittsfläche der Eintrittsöffnung der zweiten Düseneinheit. Dadurch wird die Geschwindigkeit des Gasstroms durch die Querschnittsverengung der zweiten Düseneinheit nochmals erhöht, wodurch der Gasstrom schneller aus der Vorrichtung herausströmen und in die daran angeschlossene Messeinrichtung zugeführt werden kann.

Höchst vorzugsweise kann ein Partikel-Messgerät eine erfindungsgemäße Vorrichtung aufweisen, sodass die Ansprechgeschwindigkeit des Partikel-Messgeräts infolge der Beschaffenheit der erfindungsgemäßen Vorrichtung erhöht wird.

Weitere Merkmale und Vorteile der Erfindung ergeben sich aus den Ansprüchen und der nachfolgenden Beschreibung, in der ein Ausführungsbeispiel der Erfindung unter Bezugnahme auf die Zeichnung im Einzelnen erläutert ist. Dabei zeigen:
- Fig. 1: einen schematischen Schnitt durch eine erfindungsgemäße Vorrichtung; und
- Fig. 2: einen Querschnitt durch den in Fig. 1 gezeigten Aufbau auf der axialen Höhe einer Schnittachse A.

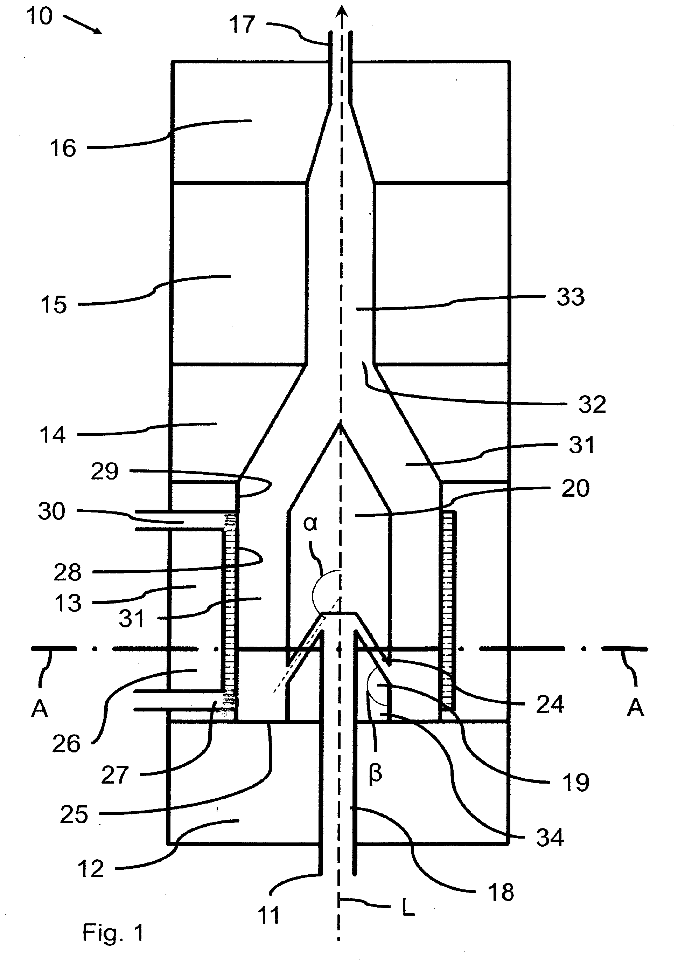

Fig. 1 zeigt im Schnitt eine erfindungsgemäße Vorrichtung 10 zum Kondensieren, die Teil eines Partikelzählers (nicht dargestellt) sein kann, der neben der Vorrichtung 10 eine Messeinheit (nicht dargestellt) aufweist. Der Vorrichtung 10 kann insbesondere ein Partikelzähler nachgeschaltet sein, der kleine Partikel eines Aerosols nachweist, die als Kondensationskerne wirken.

Die Vorrichtung 10 weist einen Einlass 11, eine Anschlusseinheit 12, eine Verdampfungseinheit 13, eine erste Düseneinheit 14, eine Kondensationseinheit 15, eine zweite Düseneinheit 16 und einen Auslass 17 der Partikelströmung auf.

Im Folgenden werden Richtungsangaben in einem zylindrischen Koordinatensystem beschrieben, dessen axiale Richtung der Längsachse L der im Wesentlichen zylindersymmetrischen Vorrichtung 10 entspricht. Dabei wird als Axialrichtung die Richtung der Erstreckung der Längsachse L von Einlass 11 zum Auslass 17 bezeichnet. In Fig. 1 ist die Axialrichtung mit einem Pfeil am oberen Ende der Längsachse L angegeben. Die radiale Erstreckung steht zur Längsachse L senkrecht; die Umlauferstreckung steht senkrecht zu beiden vorgenannten Richtungen. Die Längsachse L steht in der Regel senkrecht.

Die Anschlusseinheit 12 schließt die Vorrichtung 10 in axialer Richtung nach unten ab. Der Einlass 11 des Saturators 13 ist koaxial zur Längsachse L in der Anschlusseinheit 12 ausgestaltet und mündet in einen Zuführkanal 18, der als koaxiale Bohrung in der Anschlusseinheit 12 ausgestaltet ist.

Die Anschlusseinheit 12 ist mit der Verdampfungseinheit 13 verbunden. An der axialen oberen Stirnseite weist die Anschlusseinheit 12 einen koaxialen Leitkörper 19 auf, der koaxial in Richtung der Längsachse L in den Innenraum der Verdampfungseinheit 13 hinein ragt. Der Zuführkanal 18 geht koaxial durch den Leitkörper 19, dessen radiale Dimension in etwa dem doppelten Durchmesser des Querschnitts des Zuführkanals 18 entspricht. Der Zuführkanal 18 ragt bis in etwa ein Drittel der axialen Länge des Leitkörpers 19 in diesen hinein. Dieser Bereich stellt einen Anschlussbereich 34 des Leitkörpers 19 dar, der übrige Bereich des Leitkörpers 19 bis zu seinem axial oberen Ende wird als Umlenkbereich 20 bezeichnet.

Durch Zylinderbohrungen im Leitkörper 19 sind in Umlaufrichtung verteilt vier in Umfangsrichtung voneinander beabstandete Strömungsdurchlässe 24 mit jeweils gleichem radialen Abstand zur Längsachse L ausgebildet. Diese erstrecken sich hier jeweils mit einer länglichen koaxialen Erstreckungskomponente relativ zur Richtung der Längsachse L unter einem Winkel von etwa 150° und sind radial nach außen und axial (entgegen der Richtung der Längsachse L) nach unten gerichtet. Die Enden der Strömungsdurchlässe 24 weisen zu einem Boden 25 an der axialen Unterseite der Verdampfungseinheit 13. Anstelle der vier Strömungsdurchlässe 24 ist eine beliebige Anzahl von Strömungsdurchlässen 24 denkbar. Die Strömungsdurchlässe 24 münden in einen zylindermantelförmigen Sättigungskanal 31, der den Leitkörper 19 koaxial umgibt und radial nach außen durch eine Innenwand 26 der Verdampfungseinheit 13 sowie stromabwärts durch die Wandung der ersten Düseneinheit 14 umgeben ist, die mit radialem Abstand zu dem Leitkörper 19 angeordnet ist.

Die axiale Oberseite des Umlenkbereichs 20 des Leitkörpers 19 ist spitzkegelförmig. Die Wandung der ersten Düseneinheit 14 folgt dem kegelförmigen Umlenkbereich 20 mit radialem Abstand. Der ringförmige Sättigungskanal 31 geht derart über die Spitze des Umlenkbereichs 20 zunächst in einen zylinderförmigen Kondensationskanal 33 in die Kondensationseinheit 15 über. Dem Kondensationskanal 33 schließt sich der weiterhin im Querschnitt verlängerte Auslass 17 in der zweiten Düseneinheit 16 an.

An der radialen Innenseite der Innenwandung 26 der Verdampfungseinheit 13 ist über den gesamten Umfang derselben ein Verdampfungsteil 28 vorgesehen. Dieses weist ein Heizelement auf. Die Verdampfungseinheit ist nur sehr schematisch dargestellt. Das Verdampfungsteil 28 ist vorzugsweise mit einem schraubenförmigen nach oben offenen Flüssigkeitskanal zur Aufnahme der zu verdampfenden Flüssigkeit ausgebildet, wie dies in der DE 10 2005 001 992 A1 / EP 1 681 549 A2 beschrieben ist, deren Offenbarung vollständig zum Offenbarungsgehalt der hiesigen Offenbarung gemacht wird. Grundsätzlich kann das Verdampfungsteil 28 in anderer durch den Stand der Technik bekannter Weise ausgebildet sein, insbesondere wie dies als Stand der Technik in den genannten Druckschriften oder den in den dortigen Verfahren der genannten Druckschriften beschrieben ist.

Axial oberhalb des Verdampfungsteils 28 befindet sich ein Einlass 30, axial unterhalb ein Auslass 27 für die zu verdampfende Flüssigkeit. Auf der axialen Höhe des Bodens 25 ist die radiale Innenwand 26 der Verdampfungseinheit 13 von einem radial nach außen führenden Auslass 27 durchbrochen. Der Auslass 27 ist als zylindrische Bohrung an der linken Seite des in Fig. 1 gezeigten Schnitts der Verdampfungseinheit 13 ausgestaltet. Sowohl der Einlass 30 als auch der Auslass 27 befinden sich umfangsseitig an der gleichen Stelle. Sowohl der Einlass 30 als auch der Auslass 27 sind Teil eines Pumpkreislaufs zum Transport der zu verdampfenden Arbeitsflüssigkeit, der hier nicht näher dargestellt ist (insofern wird ebenfalls auf die DE 10 2005 001 992 A1 / EP 1 681 549 A2 verwiesen).

Durch den radialen Zwischenraum zwischen dem Verdampfungsteil 28, dem Auslass 27 und dem Einlass 30 einerseits und dem koaxial innerhalb angeordneten Leitkörper 19 andererseits ist der mantelförmige Sättigungskanal 31 ausgebildet. Radial begrenzt wird der Sättigungskanal 31 nach innen durch die Innenwand des Leitkörpers 19 und radial nach außen durch eine Innenwandung 29 der Verdampfungseinheit 13 und das Verdampfungsteil 28. Der radiale Querschnitt des Sättigungskanals 31 ist dabei größer als der radiale Querschnitt der Strömungsdurchlässe 24 und des Zuführkanals 18.

Durch das Verdampfungsteil 28 wird der Sättigungskanal 31 bei der eingesetzten Arbeitsflüssigkeit Butanol auf eine Temperatur zwischen 28°C und 40°C homogen erwärmt.

Der Sättigungskanal 31 mündet - wie gesagt - in axialer Richtung am oberen Ende der Verdampfungseinheit 13 in den Kanal der ersten Düseneinheit 14. Die erste Düseneinheit 14 ist an die Verdampfungseinheit 13 angeschlossen. Der Sättigungskanal 31 im Bereich der ersten Düseneinheit 14 weist neben seiner grundsätzlich axialen Erstreckung radial nach innen, so dass an der Austrittsöffnung 32 der ersten Düseneinheit 14 der Kanal einen kreisförmigen Querschnitt erhält und über eine Austrittsöffnung der ersten Düseneinheit 14 in den zylinderförmigen, koaxialen Kondensationskanal 33 der Kondensationseinheit 15 übergeht.

Durch Kühlelemente (nicht eingezeichnet) kann der Kondensationskanal 33 der Kondensationseinheit 15 auf eine homogene Temperatur zwischen 5°C und 25°C gekühlt sein. Der radiale Querschnitt des Kondensationskanals 32 ist im Bereich der Kondensationseinheit 15 konstant.

An die Kondensationseinheit 15 schließt sich axial nach oben die zweite Düseneinheit 16 an, deren axial zentrierter Kanal einen sich axial nach oben verjüngenden radialen Querschnitt aufweist, der schließlich zum Auslass 17 der Vorrichtung 10 führt.

Der Einlass 30 für die Verdampfungsflüssigkeit zum Verdampfungselement dient zur Zuführung der zu verdampfenden Arbeitsflüssigkeit, wie beispielsweise Butanol. Die Arbeitsflüssigkeit ist zunächst flüssig und wird durch den Einlass 30 an der axialen Oberseite der Verdampfungseinheit 13 dieser zugeführt. Die Arbeitsflüssigkeit gelangt sodann in den Bereich des Verdampfungsteils 28 und fließt durch dieses oder entlang desselben - je nach Ausgestaltung - am Verdampfungsteil 28 infolge der Schwerkraft nach unten. Durch die Temperatureinwirkung des Heizelements verdampft die Arbeitsflüssigkeit, so dass zumindest ein Teil der Arbeitsflüssigkeit in gasförmiger Phase in den Bereich des Sättigungskanals 31 gelangt. Ein nicht verdampfter Anteil der Arbeitsflüssigkeit fließt vertikal oder axial weiter nach unten bis er zum Boden 25 der Verdampfungseinheit 13 gelangt, wo der Auslass 27 für die nicht verdampfte Verdampfungsflüssigkeit den nicht verdampften Anteil der Arbeitsflüssigkeit dem Pumpkreislauf zurückführt und um einen dem verdampften Anteil entsprechenden, flüssigen Anteil ergänzt. Damit ist vermieden, dass der nicht verdampfte Anteil der Arbeitsflüssigkeit am Boden 25 der Verdampfungseinheit 13 verbleibt.

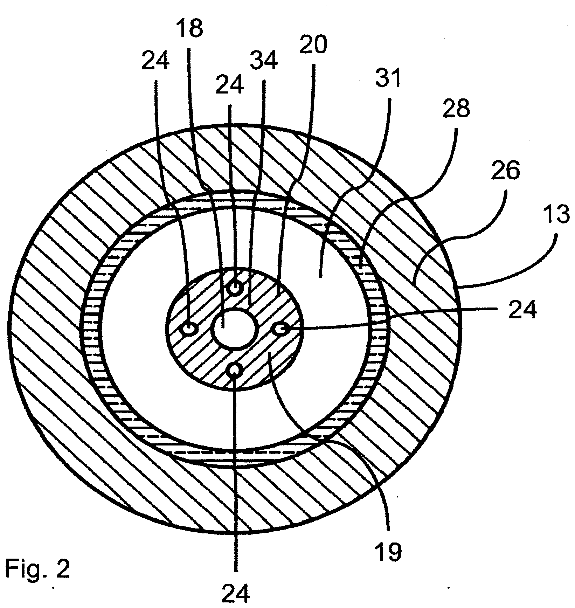

Fig. 2 zeigt einen Schnitt durch eine Schnittachse A der Fig. 1 auf der axialen Höhe des Anschlussbereichs 34 des Leitkörpers 19. Daraus sind die vier umläufig angeordneten Strömungsdurchlässe 24 ersichtlich. Die Strömungsdurchlässe 24 sind räumlich voneinander getrennt. Zwischen den Strömungsdurchlässen 24 liegt, radial zwischen den Strömungsdurchlässen 24 und dem Zuführkanal 18 angeordnet, der Anschlussbereich 34 des Leitkörpers 19 und radial zwischen den Strömungsdurchlässen 24 und dem Sättigungskanal 31 der Umlenkbereich 20 des Leitkörpers 19 in der in Fig. 2 gezeigten Schnittebene. In Fig. 2 ist weiterhin neben dem zylindermantelförmigen Sättigungskanal 31 die zylindermantelförmige Ausgestaltung des Verdampfungsteils 28 erkennbar.

Die Form des Querschnitts der in Fig. 2 gezeigten Strömungsdurchlässe 24 ist leicht elliptisch, es sind aber auch andere Ausgestaltungen, wie beispielsweise ein mehreckiger Querschnitt, oder ein über die Erstreckungsrichtung variierender Querschnitt denkbar.

Im Folgenden sei die Verfahrensweise der erfindungsgemäßen Vorrichtung 10 unter der Verwendung einer Partikel tragenden Gasströmung veranschaulicht:
Die Partikel können bis zu einem Durchmesser größer 1 nm aber insbesondere als Nanopartikel vorliegen, also eine räumliche Dimension von etwa 1 bis 100 nm aufweisen. Eine die Partikel enthaltende Gasströmung - also ein Aerosol - wird über den Einlass 11 an der axialen Unterseite der Vorrichtung 10 in den Zuführkanal 18 eingeleitet und strömt in Erstreckungsrichtung der Längsachse L, hier axial nach oben. Am Ende des Zuführkanals 18 trifft die Strömung auf den Leitkörper 19 in der Verdampfungseinheit 13 und wird infolge des Strömungsdrucks in die vier Strömungsdurchlässe 24 geleitet. Infolge der beschriebenen Ausgestaltung der Strömungsdurchlässe 24, insbesondere in Relation zum Zuführkanal 18, ändert sich die Fließrichtung der Gasströmung um einen Winkel von mehr als 90° - hier 150°.

Am jeweiligen Ende der Strömungsdurchlässe 24 wird die Aerosolströmung wiederum um mehr als 90° (hier unter einem Winkel von 150°) umgelenkt und gelangt in den Sättigungskanal 31. Spätestens hier ist die Strömung aufgrund der zweifachen erheblichen Richtungsänderung keine laminare Strömung (wie ggf. noch im Zuführkanal 18) mehr, sondern eine turbulente Strömung, die allerdings nicht stark ausgeprägt ist und als "sanfte" Wirbelströmung bezeichnet werden kann.

Eine laminare Strömung eines Fluids zeichnet sich im Sinne der Erfindung dadurch aus, dass sich das Fluid (hier Gas bzw. Aerosol) in gedachten Schichten fortbewegt, ohne dass sich die Schichten untereinander vermischen. Eine turbulente Strömung weist dagegen als Wirbelströmungen bezeichnete Verwirbelungen auf und beinhaltet damit Strömungsbereiche, die nicht zur Hauptbewegungs- bzw. Strömungsrichtung parallel gerichtet sind, wobei auch ein Abriss von Strömungslinien erfolgt. Insbesondere weist ein turbulent strömendes Fluid einen nicht unerheblichen Anteil von Strömungsrichtungen nicht entlang der Fließrichtung auf.

Im Sättigungskanal 31 liegen - wie beschrieben - Moleküle der Arbeitsflüssigkeit in gasförmiger Phase vor. Die turbulente Gasströmung bewegt sich mit einer Hauptbewegungsrichtung axial im Sättigungskanal 31 nach oben und vermischt sich infolge der Wirbelströmungen mit dem gasförmigen Anteil der Arbeitsflüssigkeit. Infolge der Wirbelströmungen der Gasströmung ist der Grad und die Geschwindigkeit der Vermischung mit der Arbeitsflüssigkeit im Vergleich zu einer laminaren Strömung stark erhöht.

Weiter in Fließrichtung axial nach oben mündet der Sättigungskanal 31 in den Kanal der ersten Düseneinheit 14. Der Kanal der ersten Düseneinheit 14 ist dahingehend ausgebildet, dass er eine radial nach innen gerichtete Komponente zur Längsachse L aufweist, so dass der Kanal der ersten Düseneinheit 14 im Bereich der Austrittsöffnung 32 in den zylindrischen koaxialen Kondensationskanal 33 der Kondensationseinheit 15 übergeht.

Der Kondensationskanal 33 ist durch Kühlelemente (nicht eingezeichnet) der Kondensationseinheit 15 auf eine Temperatur zwischen 5°C und 25°C gekühlt. Dies führt zu einer Kondensation der verdampften Moleküle der Arbeitsflüssigkeit. Dabei dienen die Partikel der Gasströmung als Kondensationskerne. Infolge der Kondensation lagern sich Moleküle der Arbeitsflüssigkeit an die Partikel der Gasströmung an und vergrößern den effektiven räumlichen Durchmesser. Die nun abgekühlte Strömung gelangt, wie gesagt, durch den Austritt der Kondensationseinheit 15 in die zweite Düseneinheit 16, deren radialer Querschnitt sich in axialer Richtung nach oben verjüngt, so dass die Geschwindigkeit der Gasströmung zunimmt, bis die Gasströmung durch den Auslass 17 der Vorrichtung 10 der angeschlossenen Messeinrichtung (nicht eingezeichnet) zugeführt wird.

Durch das Geschwindigkeitsprofil der Strömung erfolgt eine weitgehende gleichmäßige Vermischung mit dem verdampften Anteil der Arbeitsflüssigkeit. Durch die Kondensation erhöht sich die effektive räumliche Dimension der Partikel der Strömung. Für die spätere Detektierbarkeit der Partikel ist diese Größenänderung wesentlich. Durch die Wirbelströmungen der Gasströmung wird diese Größenänderung im Vergleich zu einer laminaren Strömung - wie gesagt - in erheblichem Maße verbessert.

Die untere Nachweisgrenze für den Durchmesser der zu detektierenden Partikel ist unter Anderem beeinflusst durch die Temperaturdifferenz der Temperaturen des Verdampfungselements 13 und des Kondensationselements 15. Bei einer größten Temperaturdifferenz von ca. 35° zwischen Verdampfungs- und Kondensationszone können Teilchen mit einem Durchmesser ab 4 nm detektiert werden, wobei aber insbesondere auch Detektionen von Partikeldurchmessern von z.B. 7 nm, 23 nm, etc., insbesondere 23 bis 30 nm konfigurierbar sind. Durch höhere Temperaturdifferenzen zwischen Verdampfungs- und Kondensationseinheit wird der detektierbare Durchmesser der Partikel durch Kondensation kleiner als es bei kleinen Temperaturdifferenzen der Fall ist.

## Patentansprüche

1. Vorrichtung zum Kondensieren von Dampf an Kondensationskernen, insbesondere für einen Partikelzähler, mit einem Einlass (11), über den eine Partikel als Kondensationskerne führende Gasströmung in einen Zuführkanal (18) gelangt, einem Sättigungskanal (31), einer sich zumindest über einen Teil seiner Länge erstreckenden Verdampfungseinheit (13), in der eine Arbeitsflüssigkeit in dem Sättigungskanal (31) verdampfbar ist und einem Auslass (17), der zu einer Messeinheit führt, **dadurch gekennzeichnet, dass** mehrere gleichverteilt über den Umfang des Zuführkanals (18) angeordnete Strömungsdurchlässe (24) vom Zuführkanal (18) zum Sättigungskanal (31) hin vorgesehen sind, und relativ zur Erstreckungsrichtung des Zuführkanals (18) in einem Winkel α von mehr als 90° ausgerichtet sind.

2. Vorrichtung nach Anspruch 1, **dadurch gekennzeichnet, dass** Zuführkanal (18) und Sättigungskanal (31) konzentrisch zueinander angeordnet sind.

3. Vorrichtung nach einem der Ansprüche 1 und 2, **dadurch gekennzeichnet, dass** der Sättigungskanal (31) der Verdampfungseinheit (13) mantelförmig als Ringkanal ausgestaltet ist, wobei der Sättigungskanal (31) radial nach innen durch den Leitkörper (19) und radial nach außen durch die Innenwandung (29) der Verdampfungseinheit (13) begrenzt ist.

4. Vorrichtung nach einem der Ansprüche 1 bis 3, **dadurch gekennzeichnet, dass** der mindestens eine Strömungsdurchlass (24) in Strömungsrichtung zum Sättigungskanal (31) einen Winkel β von mehr als 90° aufweist.

5. Vorrichtung nach einem der vorangehenden Ansprüche, **dadurch gekennzeichnet, dass** drei bis acht, vorzugweise vier Strömungsdurchlässe (24) gleichverteilt über den Umfang des Zuführkanals (18) angeordnet sind.

6. Vorrichtung nach einem der Ansprüche 1 bis 5, **dadurch gekennzeichnet, dass** der mindestens eine Strömungsdurchlass (24) eine Richtungskomponente entgegen der Erstreckungsrichtung des Zuführkanals (18) aufweist.

7. Vorrichtung nach einem der Ansprüche 1 bis 6, **dadurch gekennzeichnet, dass** der mindestens eine Strömungsdurchlass (24) insbesondere unter einem Winkel von bis zu 180° relativ zur Erstreckungsrichtung des Zuführkanals (18) ausgerichtet ist.

8. Vorrichtung nach einem der vorangehenden Ansprüche, **dadurch gekennzeichnet, dass** der radiale Strömungsdurchmesser des mindestens einen Strömungsdurchlasses (24), insbesondere auch der Gesamtdurchmesser der Strömungsdurchlässe (24), kleiner ist als der Strömungsdurchmesser des Zuführkanals (18) und/oder des Sättigungskanals (31).

9. Vorrichtung nach einem der vorangehenden Ansprüche, **dadurch gekennzeichnet, dass** der mindestens eine Strömungsdurchlass (24) in der Verdampfungseinheit (13) als Bohrung in einem Leitkörper (19) ausgestaltet ist, wobei insbesondere der Leitkörper (19) mindestens teilweise vom Zuführkanal (18) durchdrungen ist.

10. Vorrichtung nach einem der vorangehenden Ansprüche, **dadurch gekennzeichnet, dass** die Verdampfungseinheit (13) einen oberen Einlass (30) und einen unteren Auslass (27) zur Zu- und Abfuhr der Arbeitsflüssigkeit aufweist, wobei der Einlass (30) axial oberhalb des Auslasses (27) angeordnet ist.

11. Vorrichtung nach einem der vorangehenden Ansprüche, **dadurch gekennzeichnet, dass** der Sättigungskanal (31) bei Butanol als Arbeitsflüssigkeit eine homogene Temperatur zwischen 28°C und 40°C, bei Wasser als Arbeitsflüssigkeit eine Temperatur zwischen 45°C und 60°C aufweist.

12. Vorrichtung nach einem der vorangehenden Ansprüche, **dadurch gekennzeichnet, dass** eine Kondensationseinheit (15) mit einem Kondensationskanal (33) vorgesehen ist, wobei insbesondere der Kondensationskanal (33) durch eine Kühleinrichtung gekühlt ist, wobei insbesondere der Kondensationskanal (33) bei Butanol als Arbeitsflüssigkeit eine homogene Temperatur zwischen 5°C und 25°C, bei Wasser als Arbeitsflüssigkeit eine Temperatur zwischen 15°C und 30°C aufweist.

13. Vorrichtung nach einem der vorangehenden Ansprüche, **dadurch gekennzeichnet, dass** eine erste Düseneinheit (14) axial zwischen der Verdampfungseinheit (13) und der Kondensationseinheit (15) vorgesehen ist, wobei eine Eintrittsöffnung der ersten Düseneinheit (14) einem Auslassende des Sättigungskanals (31) der Verdampfungseinheit (13) entspricht und eine Austrittsöffnung der ersten Düseneinheit (14) zu dieser koaxial ist, wobei insbesondere die Querschnittsfläche des Auslasses der ersten Düseneinheit (14) geringer ist als die Querschnittsfläche der Eintrittsöffnung der ersten Düseneinheit (14).

14. Vorrichtung nach einem der vorangehenden Ansprüche, **dadurch gekennzeichnet, dass** eine zweite Düseneinheit (16) axial zwischen der Kondensationseinheit (15) und dem Auslass (17) vorgesehen ist, wobei die Querschnittsfläche der Austrittsöffnung der zweiten Düseneinheit (16) geringer ist als die Querschnittsfläche der Eintrittsöffnung der zweiten Düseneinheit (16).

15. Partikel-Messgerät mit einer Vorrichtung nach einem der Ansprüche 1 bis 14.

## Claims

1. Device for condensing vapor on condensation nuclei, especially for a particle counter, with an inlet (11), via which a gas stream carrying particles as condensation nuclei enters a feed channel (18); with a saturation channel (31); with an evaporation unit (13) which extends at least over part of the length of the saturation channel (31), in which evaporation unit (13) a working liquid can be evaporated in the saturation channel (31); and with an outlet (17), which leads to a measuring unit, **characterized in that** a plurality of flow passages (24) is provided from the feed channel (18) towards the saturation channel (31), wherein the flow passages (24) are distributed uniformly over the circumference of the feed channel (18), and are directed at an angle α greater than 90° in relation to the direction in which the feed channel (18) extends.

2. Device in accordance with claim 1, **characterized in that** the feed channel (18) and the saturation channel (31) are arranged concentrically to one another.

3. Device in accordance with one of the claims 1 and 2, **characterized in that** the saturation channel (31) of the evaporation unit (13) is configured in the form of a jacket as a ring channel, the saturation channel (31) being confined radially inwardly by the guide body (19) and radially outwardly by the inner wall (29) of the evaporation unit (13).

4. Device in accordance with one of the claims 1 through 3, **characterized in that** the at least one flow passage (24) has an angle β greater than 90° in the flow direction to the saturation channel (31).

5. Device in accordance with one of the above claims, **characterized in that** three to eight and preferably four flow passages (24) are distributed uniformly over the circumference of the feed channel (18)..

6. Device in accordance with one of the claims 1 through 5, **characterized in that** the at least one flow passage (24) has a direction component opposite the direction in which the feed channel (18) extends.

7. Device in accordance with one of the claims 1 through 6, **characterized in that** the at least one flow passage (24) is directed in relation to the direction in which the feed channel (18) extends at an angle of up to 180°.

8. Device in accordance with one of the above claims, **characterized in that** the radial flow diameter of the at least one flow passage (24), especially also the overall diameter of the flow passages (24), is smaller than the flow diameter of the feed channel (18) and/or of the saturation channel (31).

9. Device in accordance with one of the above claims, **characterized in that** the at least one flow passage (24) in the evaporation unit (13) is configured as a hole in a guide body (19), wherein especially the feed channel (18) passes at least partly through the guide body (19).

10. Device in accordance with one of the above claims, **characterized in that** the evaporation unit (13) has an upper inlet (30) and a lower outlet (27) for feeding and removing the working liquid, the inlet (30) being arranged axially above the outlet (27).

11. Device in accordance with one of the above claims, **characterized in that** the saturation channel (31) has a homogeneous temperature between 28°C and 40°C in case of butyl alcohol as the working liquid and a temperature between 45°C and 60°C in case of water as the working liquid.

12. Device in accordance with one of the above claims, **characterized in that** a condensation unit (15) with a condensation channel (33) is provided, wherein especially the condensation channel (33) is cooled by a cooling device, wherein especialy the condensation channel (33) has a homogeneous temperature between 5°C and 25°C in case of butyl alcohol as the working liquid and a temperature between 15°C and 30°C in case of water as the working liquid.

13. Device in accordance with one of the above claims, **characterized in that** a first nozzle unit (14) is provided axially between the evaporation unit (13) and the condensation unit (15), wherein an inlet opening of the first nozzle unit (14) corresponds to an outlet end of the saturation channel (31) of the evaporation unit (13) and an outlet opening of the first nozzle unit (14) is coaxial to this, wherein especially the cross-sectional area of the outlet of the first nozzle unit (14) is smaller than the cross-sectional area of the inlet opening of the first nozzle unit (14).

14. Device in accordance with one of the above claims, **characterized in that** a second nozzle unit (16) is provided axially between the condensation unit (15) and the outlet (17), wherein the cross-sectional area of the outlet opening of the second nozzle unit (16) is smaller than the cross-sectional area of the inlet opening of the second nozzle unit (16).

15. Particle-measuring device with a device in accordance with one of the claims 1 through 14.

## Revendications

1. Dispositif pour la condensation de vapeur sur des noyaux de condensation, en particulier pour un compteur de particules, le dispositif comportant une entrée (11) par laquelle un flux de gaz transportant des particules sous forme de noyaux de condensation est introduit dans un canal d'amenée (18), un canal de saturation (31), une unité d'évaporation (13) s'étendant au moins sur une partie de sa longueur, unité d'évaporation dans laquelle un fluide de travail peut être évaporé dans le canal de saturation (31), et une sortie (17) menant à une unité de mesure, **caractérisé en ce que** plusieurs passages de flux (24) sont prévus du canal d'amenée (18) vers le canal de saturation (31), répartis de manière uniforme sur la circonférence du canal d'amenée (18) et orientés selon un angle α de plus de 90° par rapport à la direction d'extension du canal d'amenée (18).

2. Dispositif selon la revendication 1, **caractérisé en ce que** le canal d'amenée (18) et le canal de saturation (31) sont disposés de manière concentrique l'un par rapport à l'autre.

3. Dispositif selon l'une des revendications 1 et 2, **caractérisé en ce que** le canal de saturation (31) de l'unité d'évaporation (13) est réalisé sous la forme d'un canal annulaire en forme d'enveloppe, le canal de saturation (31) étant délimité radialement vers l'intérieur par le corps de guidage (19) et radialement vers l'extérieur par la paroi intérieure (29) de l'unité d'évaporation (13).

4. Dispositif selon l'une des revendications 1 à 3, **caractérisé en ce que** l'au moins un passage de flux (24) présente un angle β de plus de 90° dans la direction de flux vers le canal de saturation (31).

5. Dispositif selon l'une des revendications précédentes, **caractérisé en ce que** trois à huit, de préférence quatre passages de flux (24) sont repartis de manière uniforme sur la circonférence du canal d'amenée (18).

6. Dispositif selon l'une des revendications 1 à 5, **caractérisé en ce que** l'au moins un passage de flux (24) présente une composante directionnelle opposée à la direction d'extension du canal d'amenée (18).

7. Dispositif selon l'une des revendications 1 à 6, **caractérisé en ce que** l'au moins un passage de flux (24) est orienté en particulier suivant un angle allant jusqu'à 180° par rapport à la direction d'extension du canal d'amenée (18).

8. Dispositif selon l'une des revendications précédentes, **caractérisé en ce que** le diamètre de flux radial de l'au moins un passage de flux (24), en particulier également le diamètre total des passages de flux (24), est inférieur au diamètre de flux du canal d'amenée (18) et/ou du canal de saturation (31).

9. Dispositif selon l'une des revendications précédentes, **caractérisé en ce que** l'au moins un passage de flux (24) dans l'unité d'évaporation (13) est réalisé sous la forme d'un alésage dans un corps de guidage (19), le corps de guidage (19) en particulier étant au moins partiellement traversé par le canal d'amenée (18).

10. Dispositif selon l'une des revendications précédentes, **caractérisé en ce que** l'unité d'évaporation (13) comporte une entrée supérieure (30) et une sortie inférieure (27) pour l'amenée et l'évacuation du fluide de travail, l'entrée (30) étant disposée axialement au-dessus de la sortie (27).

11. Dispositif selon l'une des revendications précédentes, **caractérisé en ce que** le canal de saturation (31) a une température homogène comprise entre 28 et 40 °C lorsque le butanol sert de fluide de travail, et une température comprise entre 45 et 60 °C lorsque l'eau sert de fluide de travail.

12. Dispositif selon l'une des revendications précédentes, **caractérisé en ce qu'**une unité de condensation (15) est prévue, laquelle unité de condensation comporte un canal de condensation (33), le canal de condensation (33) en particulier étant refroidi par un dispositif de refroidissement, le canal de condensation (33) en particulier a une température homogène comprise entre 5 et 25 °C lorsque le butanol sert de fluide de travail et une température comprise entre 15 et 30 °C lorsque l'eau sert de fluide de travail.

13. Dispositif selon l'une des revendications précédentes, **caractérisé en ce qu'**une première unité de buse (14) est prévue axialement entre l'unité d'évaporation (13) et l'unité de condensation (15), une ouverture d'entrée de la première unité de buse (14) correspondant à une extrémité de sortie du canal de saturation (31) de l'unité d'évaporation (13) et une ouverture de sortie de la première unité de buse (14) étant coaxiale à celle-ci, la surface de section transversale de la sortie de la première unité de buse (14) en particulier étant inférieure à la surface de section transversale de l'ouverture d'entrée de la première unité de buse (14).

14. Dispositif selon l'une des revendications précédentes, **caractérisé en ce qu'**une seconde unité de buse (16) est prévue axialement entre l'unité de condensation (15) et la sortie (17), la surface de section transversale de l'ouverture de sortie de la seconde unité de buse (16) est inférieure à la surface de section transversale de l'ouverture d'entrée de la seconde unité de buse (16).

15. Appareil de mesure de particules comportant un dispositif selon l'une des revendications 1 à 14.
